# EUROPEAN PATENT APPLICATION

(11) **EP 4 372 212 A1**
(43) Date of publication of application: **22.05.2024**
(21) Application number: 23203105.4
(22) Date of filing: 12.10.2023
(51) Int. Cl.: F01D 25/12

(54) **A METHOD OF MANUFACTURING A TURBINE COMPONENT**

(30) Priority: 11.11.2022 GB 202216827
(71) Applicant: Rolls-Royce plc, London N1 9FX (GB)
(72) Inventor: Houghton, Thomas, Derby, DE24 8BJ (GB); Simms, Mark, Derby, DE24 8BJ (GB)
(74) Representative: Rolls-Royce plc

(57) **Abstract**

The present disclose provides a method of manufacturing a turbine component (32) for a gas turbine engine, comprising: forming, by a casting process, a primary component (23); forming, by an additive manufacturing process, a secondary component (27), wherein the secondary component (27) comprises a main air passageway (30) extending therethrough; assembling the primary component (23) and the secondary component (27) together to form the turbine component (32), wherein the main air passageway (30) of the secondary component (27) forms part of an internal air flow path through the turbine component (32).

## Description

### Field of Disclosure

The present disclosure relates to a method of manufacturing a turbine component for a gas turbine engine and a turbine component for a gas turbine engine.

### Background

Turbine components in gas turbine engines experience high temperatures in use, due to the high temperature of combustion gases flowing through the turbine. It is therefore necessary to provide cooling to these components in use. Typically, these turbine components are cooled by directing relatively cooler air through internal cooling passageways formed in the turbine component.

Turbine components are usually manufactured from high temperature capable metals using a casting process. The internal cooling passageways may be formed during this casting process by using one or more ceramic cores. The ceramic core is created by injecting ceramic material into a die to create an exact representation of the internal geometry of the turbine component. The ceramic core is inserted into a wax-pattern die, where a wax mould of the turbine component is created. An investment (lost-wax) casting process is used to produce the turbine component while the ceramic core creates an internal cavity in the metal turbine component. The ceramic core is then chemically leached out of the metal turbine component to leave internal cooling passages within the metal turbine component.

The complexity of the internal cooling passageways is limited by the complexity permitted by the die used to create the ceramic core. Increasing the complexity of the die adds cost to the manufacturing process and does not reliably achieve the required complexity of the internal cooling passageways.

Therefore, there is a need to develop an improved manufacturing process which addresses at least some of the aforementioned problems.

### Summary

According to a first aspect of the present disclosure, there is provided a method of manufacturing a turbine component for a gas turbine engine, comprising: forming, by a casting process, a primary component; forming, by an additive manufacturing process, a secondary component, wherein the secondary component comprises a main air passageway extending therethrough; assembling the primary component and the secondary component together to form the turbine component, wherein the main air passageway of the secondary component forms part of an internal air flow path through the turbine component.

Assembling the primary component and the secondary component together may comprise inserting the secondary component into a cavity of the primary component; and retaining the secondary component in the cavity.

Assembling the primary component and the secondary component together may comprise joining the secondary component to the primary component by at least one of a welding process, a brazing process, a mechanical fastener, and an interference fit.

The method may further comprise forming an auxiliary air passageway through the primary component. The auxiliary air passageway may form part of the internal air flow path through the turbine component.

The auxiliary air passageway may be formed through the primary component before assembling the primary component and the secondary component together to form the turbine component.

The main air passageway may extend between a main passageway inlet and a main passageway outlet. The auxiliary air passageway may extend between an auxiliary passageway inlet and an auxiliary passageway outlet. The main passageway outlet may be fluidly coupled with the auxiliary passageway inlet and may be configured to deliver a flow of air from the main air passageway to the auxiliary air passageway.

The secondary component may comprise an outlet surface arranged to face and be offset from an impingement surface of the primary component to create a cooling chamber between the primary component and the secondary component when the primary component and the secondary component are assembled to form the turbine component. The main passageway outlet may be located on the outlet surface and the auxiliary passageway inlet may be located on the impingement surface. The main passageway outlet may be offset relative to the auxiliary passageway inlet and configured to direct a flow of air to impinge on the impingement surface before entering the auxiliary passageway inlet.

A wall may extend between the outlet surface and the impingement surface. The wall may be configured to sealingly divide the cooling chamber into a first compartment and a second compartment.

The main air passageway may comprise a plurality of main passageway outlets. The auxiliary air passageway may comprise a plurality of auxiliary air passageway inlets. A first set of the plurality of main passageway outlets may open into the first compartment and a second set of the plurality of main passageway outlets may open into the second compartment. The first set of the plurality of main passageway outlets may be fluidly coupled with a first set of the plurality of auxiliary passageway inlets. The second set of the plurality of main passageway outlets may be fluidly coupled with a second set of the plurality of auxiliary passageway inlets.

The wall may be resiliently deformable.

According to a second aspect of the present disclosure, there is provided a turbine component for a gas turbine engine, comprising: a cast primary component; and an additively manufactured secondary component comprising a main air passageway extending therethrough; wherein the primary component is assembled to the secondary component to form the turbine component; and wherein the main air passageway of the secondary component forms part of an internal air flow path through the turbine component.

The secondary component may be retained in a cavity of the primary component.

The primary component may comprise an auxiliary air passageway extending therethrough. The auxiliary air passageway may form part of the internal air flow path through the turbine component.

The main air passageway may extend between a main passageway inlet and a main passageway outlet. The auxiliary air passageway may extend between an auxiliary passageway inlet and an auxiliary passageway outlet. The main passageway outlet may be fluidly coupled with the auxiliary passageway inlet and may be configured to deliver a flow of air from the main air passageway to the auxiliary air passageway.

The secondary component may comprise an outlet surface arranged to face and be offset from an impingement surface of the primary component to create a cooling chamber between the primary component and the secondary component. The main passageway outlet may be located on the outlet surface. The auxiliary passageway inlet may be located on the impingement surface. The main passageway outlet may be offset relative to the auxiliary passageway inlet and may be configured to direct a flow of air to impinge on the impingement surface before entering the auxiliary passageway inlet.

A wall may extend between the outlet surface and the impingement surface. The wall may be configured to sealingly divide the cooling chamber into a first compartment and a second compartment.

The main air passageway may comprise a plurality of main passageway outlets. The auxiliary air passageway comprises a plurality of auxiliary air passageway inlets. A first set of the plurality of main passageway outlets may open into the first compartment. A second set of the plurality of main passageway outlets may open into the second compartment. The first set of the plurality of main passageway outlets may be fluidly coupled with a first set of the plurality of auxiliary passageway inlets. The second set of the plurality of main passageway outlets may be fluidly coupled with a second set of the plurality of auxiliary passageway inlets.

The wall may be resiliently deformable.

The turbine component may be one of a turbine shroud segment, a nozzle guide vane, and a turbine blade.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

### Brief Description of the Drawings

Embodiments will now be described by way of example only, with reference to the Figures, in which:
Figure 1 is a cross-sectional view of a gas turbine engine;
Figure 2 is an isometric view of an example primary component;
Figure 3 is an isometric view of an example secondary component;
Figure 4 is an isometric view of a first example turbine component;
Figure 5 is a cross-sectional view of the first example turbine component of Figure 4 through the line A-A;
Figure 6 is a cross-sectional view of the first example turbine component of Figure 4 through the line B-B;
Figure 7 is a cross-sectional view of a second example turbine component; and
Figure 8 is a flow diagram showing a method of manufacturing a turbine component for a gas turbine according to the present disclosure.

### Detailed Description

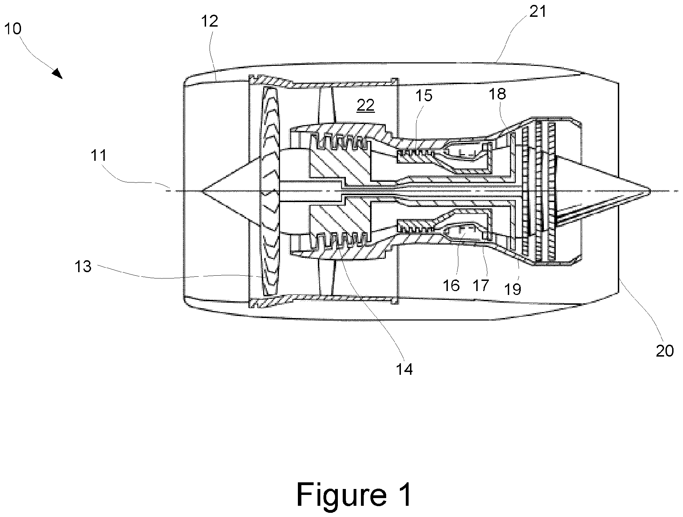

With reference to **Figure** 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high-pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high-pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g., two) and/or an alternative number of compressors and/or turbines. Further the engine may comprise a gearbox provided in the drive train from a turbine to a compressor and/or fan.

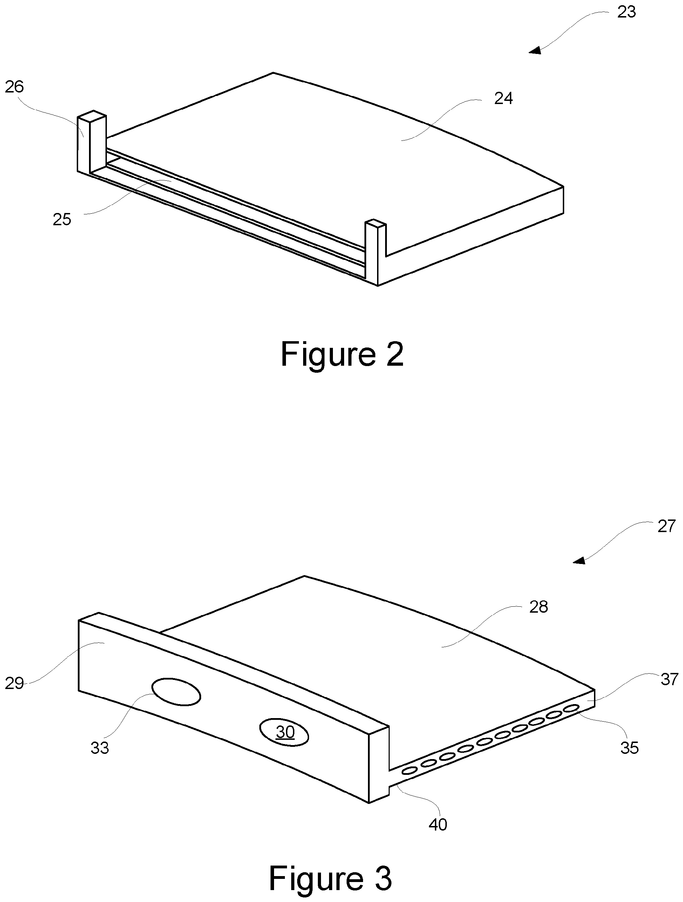

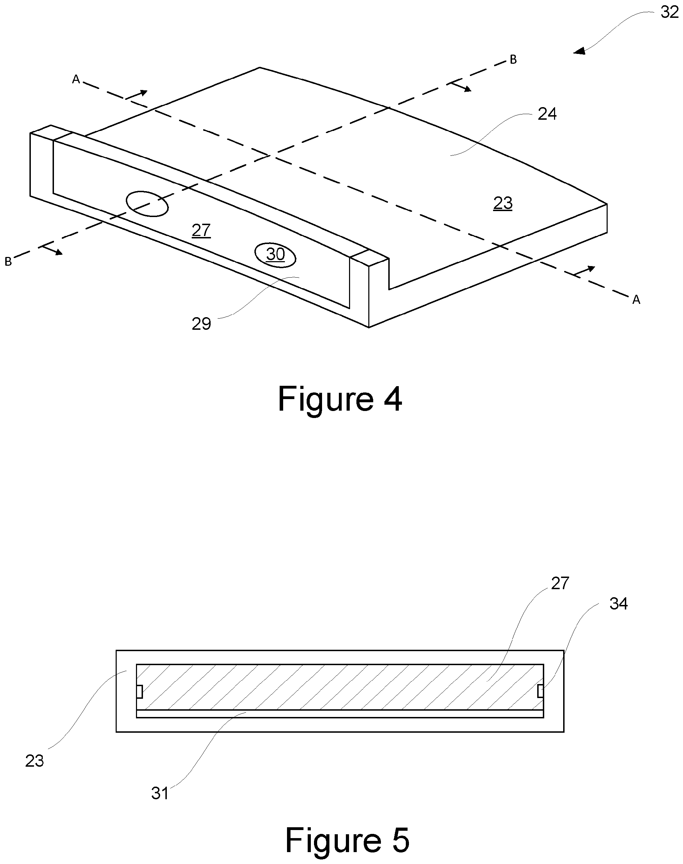

A turbine component for a gas turbine engine according to the present disclosure is formed from a primary component and a secondary component which are assembled together. **Figure 2** shows a primary component 23, **Figure 3** shows a secondary component 27, and **Figure 4** shows the assembled turbine component 32. Here, the turbine component is a shroud segment for a turbine shroud ring of a gas turbine engine. In a gas turbine engine, shroud segments form a turbine shroud ring which extends circumferentially around the turbine blades of the engine. The purpose of the seal segment ring is to prevent the hot combustion products from the combustion equipment 16 from leaking past the turbine. In other examples, the turbine component may be a nozzle guide vane or a turbine blade.

The primary component 23 comprises a main body 24, an internal cavity 25, and one or more external features 26. The internal cavity 25 is configured to receive at least a part of the secondary component 27. The primary component 23 is formed from a metal.

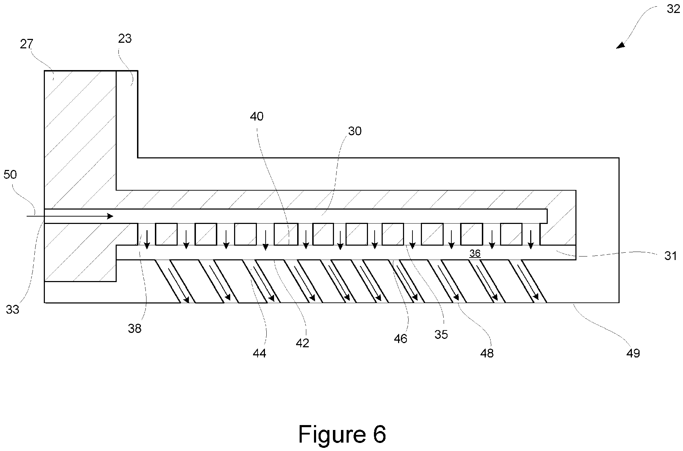

The primary component 23 is formed by a casting process. In an example, the casting process may be a known investment (lost wax) casting process. The primary component 23 also comprises at least one auxiliary air passageway 44 formed therethrough, as shown in Figure 6.

The secondary component 27 comprises a main body 28 and a flange 29 extending from the main body 28. The secondary component 27 also comprises at least one main air passageway 30 extending therethrough. The main air passageway 30 is configured to allow a flow of air to pass through the secondary component 27. The form and profile of the main air passageway 30 can be of any complexity which is suitable for the turbine component. The main air passageway 30 extends between a main passageway inlet 33 and a main passageway outlet 35. The main passageway inlets 33 are shown as substantially circular holes in this example, but in other examples, the main passageway inlets 33 may have any suitable shape and size. The main passageway outlet 35 may open at a circumferential surface 37 or a radial surface 40 of the main body 28. The main passageway outlet may open at any surface of the main body 28 which is arranged to interface with the primary component 23 when the primary component 23 and the secondary component 27 are assembled together. The main air passageway 30 may comprise a plurality of main passageway outlets 35, as shown in Figure 3. The secondary component 27 is formed by an additive manufacturing process. The additive manufacturing process is also used to form the main air passageway 30. The additive manufacturing process may include a powder bed process, a material deposition process, or a 3D printing process. For example, the powder bed process may be a laser powder bed process. The secondary component 27 may be formed from a metal.

The primary component 23 and the secondary component 27 are assembled together to form the turbine component 32. The main body 28 of the secondary component 27 is sized to correspond to the cavity 25 of the primary component 23. The cavity 25 is configured to receive the main body 28 of the secondary component 27. During assembly, the main body 28 of the secondary component 27 is inserted into the cavity 25 of the primary component 23. **Figure 5** shows a cross-section of the assembled turbine component 32 through the plane denoted by the line A-A. The primary component 23 and the secondary component 27 have one or more corresponding guiding features 34 which enables the secondary component 27 to be correctly positioned relative to the primary component 23. The guiding features 34 also enable the secondary component 27 to be easily inserted into the cavity 25 of the primary component 23. In this example, the guiding features 34 comprise a male rib projecting into the cavity 25 and a corresponding female groove formed in the main body 28 of the secondary component 27. In other examples, the rib may be located on the main body 28 of the secondary component 27 and the groove may be located on the cavity 25. In further examples, the guiding features 34 may comprise any suitable structural features which enables the secondary component 27 to be correctly positioned relative to the primary component 23. The guiding features 34 may be resiliently deformable. Any dimensional variations between the primary component 23 and the secondary component 27 caused by manufacture can be overcome by the resiliently deformable guiding features 34, as they can deform sufficiently to conform to the manufactured dimensions of the primary component 23. The secondary component 27 is smaller in width relative to the cavity 25, such that a gap 31 is formed between the secondary component 27 and the inner surface of the cavity 25.

Once the primary component 23 and the secondary component 27 are assembled together, the main body 28 of the secondary component 27 is retained within the cavity 25. The main body 28 of the secondary component 27 may be retained within the cavity 25 by means of an interference fit between the two components. Alternatively, or in addition, the main body 28 of the secondary component 27 may be retained within the cavity 25 by joining the primary component 23 to the secondary component 27. The primary component 23 may be joined to the secondary component 27 by a welding process or a brazing process. Alternatively, the primary component 23 may be joined to the secondary component 27 by means of mechanical fasteners.

The external features 26 of the primary component 23 are configured to correspond to the flange 29 of the secondary component 27 such that the outer surfaces of the primary component 23 and the secondary component 27 are generally contiguous when assembled to form the turbine component 32. In other examples, the external features of the primary component are configured to correspond to any other external features of the secondary component such that the outer surfaces of the primary component and the secondary component are generally contiguous when assembled to form the turbine component.

**Figure 6** shows a side cross-section through an assembled first example turbine component 32 through the plane denoted by the line B-B in Figure 4. The main air passageway 30 forms part of an internal air flow path through the turbine component 32.

The main air passageway 30 extends along the length of the secondary component 27. In other examples, the main air passageway may extend to different lengths through the secondary component. The main air passageway 30 extends between main passageway inlets 33 and a plurality of main passageway outlets 35. A plurality of air holes 38 extend from the main air passageway, with each air hole 38 terminating at a respective one of the main passageway outlets 35. In other examples, the main air passageway 30 may only have a single main passageway inlet. In further examples, the main air passageway may only have a single main passageway outlet. In further examples, each air hole may terminate at a plurality of main passageway outlets. The main passageway outlets 35 are located on an outlet surface 40 of the secondary component 27. The outlet surface 40 faces an impingement surface 42 of the primary component 23. The impingement surface 42 corresponds to an inner surface of the cavity 25. The outlet surface 40 is substantially parallel to the impingement surface 42. The outlet surface 40 is offset (i.e., separated) from the impingement surface 42, such that the gap 31 between the secondary component 27 and the inner surface of the cavity 25 is defined between the outlet surface 40 and the impingement surface 42. The gap 31 forms a cooling chamber 36 between the primary component 23 and the secondary component 27.

The primary component 23 comprises a plurality of auxiliary air passageways 44 extending therethrough. Each of the auxiliary air passageways 44 forms part of the internal air flow path through the turbine component 32. Each of the plurality of auxiliary air passageways 44 extends between a respective auxiliary passageway inlet 46 formed at the impingement surface 42 and a respective auxiliary passageway outlet 48 formed at an external surface 49 of the primary component 23. The external surface 49 may be any surface of the main body 24 of the primary component 23. In other examples, the primary component 23 may only have a single auxiliary air passageway. The auxiliary air passageways 44 are inclined relative to the impingement surface 42. However, in other examples, the auxiliary air passageways 44 may extend perpendicularly to the impingement surface. The auxiliary air passageways 44 are formed in the primary component by drilling. The auxiliary air passageways 44 are drilled in a direction towards the cavity 25. The auxiliary air passageways 44 can be formed before the secondary component 27 and the primary component 23 are assembled together. This enables the auxiliary air passageways 44 to be formed easily, without risk of damaging any of the internal geometry formed by the secondary component 27. It also enables the primary component 23, and in particular the auxiliary air passageways 44, to be easily inspected for manufacturing quality and/or damage, before the secondary component 27 and the primary component 23 are assembled together.

The main passageway outlets 35 are fluidly coupled with the auxiliary passageway inlets 46, via the cooling chamber 36. The positions of the main passageway outlets 35 are offset with respect to the positions of the auxiliary passageway inlets 46. In particular, the positions of the main passageway outlets 35 are staggered with respect to the positions of the auxiliary passageway inlets 46. This means that a flow of air 50 exiting a main passageway outlet 35 is directed to enter the cooling chamber 36 and first impinge upon the impingement surface 42. The air 50 then exits the cooling chamber 36 via one of the auxiliary air passageways 44. In other examples, the positions of the main passageway outlets 35 may be aligned with the positions of the auxiliary passageway inlets 46.

In use, the external surface 49 of the turbine component 32 is exposed to high temperatures, causing heating of the turbine component 32. A flow of relatively cool air 50 enters the turbine component 32 via the main passageway inlet 33. The air flows along the main air passageway 30, providing cooling air along the length of the turbine component 32. The air 50 enters the air holes 38 and leaves the secondary component 27 via the main passageway outlets 35. The air 50 then enters the cooling chamber 36. The air 50 first impinges upon the impingement surface 42 of the primary component 23. By having cool air flow within the cooling chamber 36 and impinging upon the impingement surface 42, heat is transferred from the turbine component 32 to the air 50, thereby cooling the turbine component 32. The air 50 then enters the auxiliary air passageways 44 via the respective auxiliary passageway inlet 46 and leaves the auxiliary air passageways 44 via the respective auxiliary passageway outlet 48. The now heated air 50 then exits the turbine component 32.

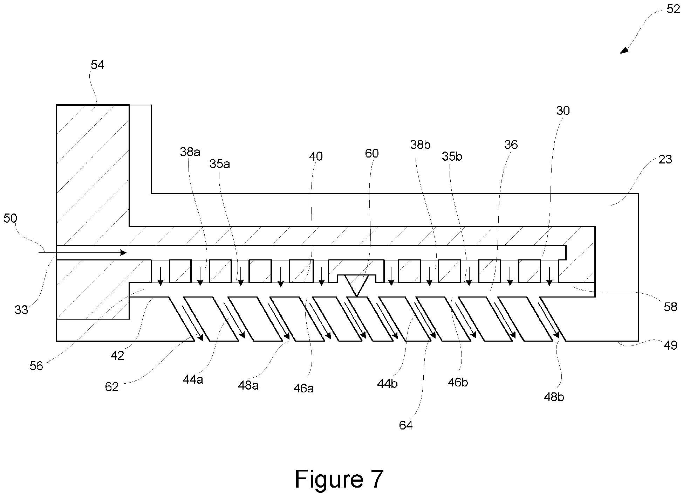

**Figure 7** illustrates a cross-section through a second example turbine component 52. It will be appreciated that the second example turbine component 52 is substantially similar to the first example, with like reference numerals denoting like features. The second example turbine component 52 differs with respect to the first example by an additional wall formed on the secondary component.

The secondary component 54 comprises a wall 60 extending from the outlet surface 40. The wall 60 extends across the width of the main body 28 of the secondary component 54. The wall 60 is also formed during the additive manufacturing process used to form the secondary component 54. The wall 60 may be resiliently deformable. The wall 60 is configured to interface with the impingement surface 42 of the primary component 23 when the primary component 23 and the secondary component 54 are assembled together. The interface between the wall 60 and the impingement surface 42 is an interference fit. In other examples, the interface may comprise any suitable retaining features between the wall 60 and the impingement surface 42, for example a groove on the impingement surface 42 sized to receive and retain the wall 60. In other examples, the secondary component 54 may comprise a plurality of walls extending from the outlet surface. In further examples, the wall may be formed on the primary component 23 and configured to interface with the outlet surface 40.

The wall 60, when interfaced with the impingement surface 42, acts to divide the cooling chamber 36 into a first compartment 56 and a second compartment 58. In particular, the wall forms a seal between the first compartment 56 and the second compartment 58 such that air is prevented from mixing between the first compartment 56 and the second compartment 58. In examples where the secondary component 54 may comprise a plurality of walls extending from the outlet surface, the plurality of walls interface with the impingement surface 42 to divide the cooling chamber into three or more compartments.

The air holes 38 extending from the main air passageway 30 are divided into a first set 38a opening into the first compartment 56 and second set 38b opening into the second compartment 58. Each of the first set of air holes 38a terminates at a respective one of a first set of main passageway outlets 35a. Likewise, each of the second set of air holes 38b terminates at a respective one of a second set of main passageway outlets 35b. The auxiliary air passageways 44 are also divided between a first set 44a coupled with the first compartment 56 and a second set 44b coupled with the second compartment 58. The first set of main passageway outlets 35a is fluidly coupled with a first set of auxiliary passageway inlets 46a, via the first compartment 56. The second set of main passageway outlets 35b is fluidly coupled with a second set of auxiliary passageway inlets 46b, via the second compartment 58. This means that a flow of air 50 entering the main air passageway 30 is divided between the first and second sets of air holes 38a, 38b and is split between the first and second compartments 56, 58. The air is able to exit the first compartment 56 via the first set of auxiliary air passageways 44a and exit the second compartment 58 via the second set of auxiliary air passageways 44b.

In use, the external surface 49 of the turbine component 52 is exposed to high temperatures, causing heating of the turbine component 52. A flow of relatively cool air 50 enters the turbine component 52 via the main passageway inlet 33. The air flows along the main air passageway 30, providing cooling air along the length of the turbine component 52. The air 50 enters the first set 38a and second set 38b of air holes. The air leaves the secondary component 54 and enters the first compartment 56 via the first set of main passageway outlets 35a and enters the second compartment 58 via the second set of main passageway outlets 35b. The air 50 impinges upon the impingement surface 42 of the primary component 23 in the first compartment 56 and the second compartment 58. Heat is thereby transferred from the turbine component 52 to the air 50, thereby cooling the turbine component 52. The now heated air 62 in the first compartment 56 exits the first compartment 56 via the first set of auxiliary passageways 44a and subsequently exits the turbine component 52 via the first set of auxiliary passageway outlets 48a. The heated air 64 exits the second compartment 58 via the second set of auxiliary passageways 44b and subsequently exits the turbine component 52 via the second set of auxiliary passageway outlets 48b. The air is prevented from mixing between the first compartment 56 and the second compartment 58. This means that cool air which enters the second compartment 58 is prevented from mixing with hotter air 62 in the first compartment 56 which has gained heat from surrounding portions of the turbine component 52. Air can therefore remain relatively cool as it enters the second compartment 58, thereby improving the ability of the air to gain heat from and cool the portions of the turbine component 52 which are adjacent to the second compartment 58. One compartment may be arranged to receive more cooling air than the other compartment, depending on the relative temperatures of the portions of the turbine component 52 which are adjacent to the respective compartments. The position of the compartments relative to the turbine component may be arranged based on the relative cooling air flow required for different portions of the turbine component.

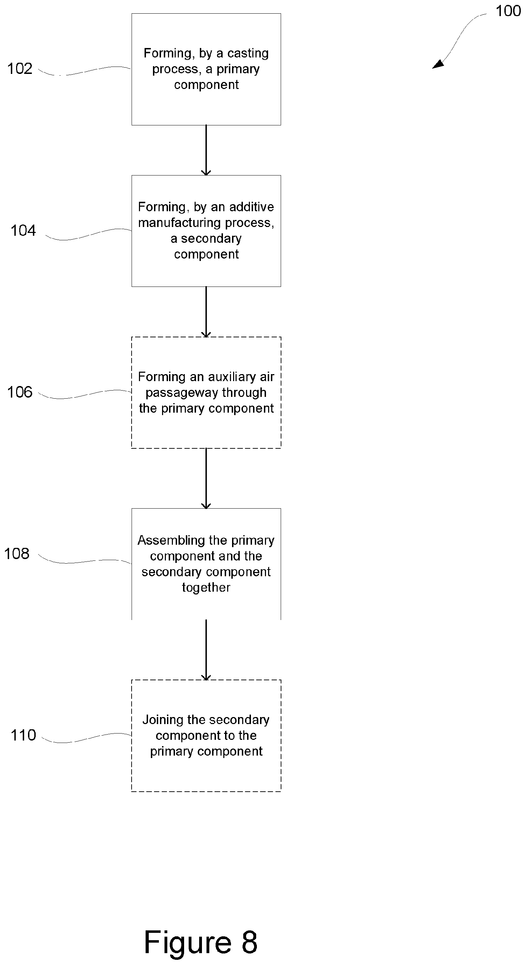

**Figure 8** shows a flow diagram showing a method 100 of manufacturing a turbine component for a gas turbine engine, for example as in accordance with the examples discussed above with reference to Figures 2-7. In a first step 102, the method comprises forming, by a casting process, a primary component. In a second step 104, the method comprises forming, by an additive manufacturing process, a secondary component, wherein the secondary component comprises a main air passageway extending therethrough. Optionally, in a third step 106, the method may comprise forming an auxiliary air passageway through the primary component, the auxiliary air passageway forming part of an internal air flow path through the turbine component. In a fourth step 108, the method comprises assembling the primary component and the secondary component together to form the turbine component, wherein the main air passageway of the secondary component forms part of the internal air flow path through the turbine component. Assembling the primary component and the secondary component together may comprise inserting the secondary component into a cavity of the primary component and retaining the secondary component in the cavity. Optionally, in a fifth step 110, the method may comprise joining the secondary component to the primary component by at least one of a welding process, a brazing process, a mechanical fastener, and an interference fit.

The method of the present disclosure provides an improved method of manufacturing a turbine component with complex internal geometry. As the internal cooling air passageway is formed in the secondary component, which is produced by an additive manufacturing process, greater complexity of the internal geometry is possible than would be achievable by a traditional casting process. The complexity of the design of the secondary component is not limited by die complexity because of the greater spatial capability of additive manufacturing. Therefore, more complex internal geometry can be produced at lower cost and with a more simplified process. This also enables the turbine component to have potentially greater cooling performance. As the primary component and secondary component are formed by different processes, the primary component and secondary component can be produced by simultaneously running processes, thereby reducing overall manufacturing time. The method also enables the internal geometry of the turbine component to be optimised more quickly and at lower material cost. This is because multiple iterations of the secondary component can be used with the same primary component, by maintaining the same external geometry of the secondary component which interfaces with the primary component for assembly. In addition, the secondary component can be made from a lower performance material than the primary component as it is not exposed to the high temperatures that the primary component is exposed to in use. This results in lower material cost. The cost of the casting process is also reduced, as the primary component has relatively simple internal geometry.

It will be understood that the disclosure is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method of manufacturing a turbine component (32) for a gas turbine engine, comprising:
forming, by a casting process, a primary component (23);
forming, by an additive manufacturing process, a secondary component (27), wherein the secondary component comprises a main air passageway (30) extending therethrough;
assembling the primary component (23) and the secondary component (27) together to form the turbine component (32), wherein the main air passageway (30) of the secondary component (27) forms part of an internal air flow path through the turbine component (32).

2. The method as claimed in Claim 1, wherein assembling the primary component (23) and the secondary component (27) together comprises:
inserting the secondary component (27) into a cavity (25) of the primary component (23); and
retaining the secondary component (27) in the cavity (25).

3. The method as claimed in Claim 1 or Claim 2, assembling the primary component (23) and the secondary component (27) together comprises joining the secondary component (27) to the primary component (23) by at least one of a welding process, a brazing process, a mechanical fastener, and an interference fit.

4. The method as claimed in any one of Claims 1 to 3, further comprising forming an auxiliary air passageway (44) through the primary component (23), the auxiliary air passageway (44) forming part of the internal air flow path through the turbine component.

5. The method as claimed in Claim 4, wherein the auxiliary air passageway (44) is formed through the primary component (23) before assembling the primary component (23) and the secondary component (27) together to form the turbine component (32).

6. The method as claimed in any one of Claims 4 to 5, wherein the main air passageway (30) extends between a main passageway inlet (33) and a main passageway outlet (35), and the auxiliary air passageway (44) extends between an auxiliary passageway inlet (46) and an auxiliary passageway outlet (48);
wherein the main passageway outlet (35) is fluidly coupled with the auxiliary passageway inlet (46) and configured to deliver a flow of air from the main air passageway (30) to the auxiliary air passageway (44).

7. The method as claimed in Claim 6, wherein the secondary component (27) comprises an outlet surface (40) arranged to face and be offset from an impingement surface (42) of the primary component (23) to create a cooling chamber (36) between the primary component (23) and the secondary component (27) when the primary component (23) and the secondary component (27) are assembled to form the turbine component (32).

8. The method as claimed in Claim 7, wherein the main passageway outlet (35) is located on the outlet surface (40) and the auxiliary passageway inlet (46) is located on the impingement surface (42), the main passageway outlet (35) being offset relative to the auxiliary passageway inlet (46) and configured to direct a flow of air to impinge on the impingement surface (42) before entering the auxiliary passageway inlet (46).

9. The method (100) as claimed in Claim 7 or Claim 8, wherein a wall extends between the outlet surface (40) and the impingement surface (42), the wall (60) being configured to divide the cooling chamber (36) into a first compartment (56) and a second compartment (58).

10. The method (100) as claimed in Claim 9, wherein the main air passageway (30) comprises a plurality of main passageway outlets (35a, 35b) and the auxiliary air passageway (44a, 44b) comprises a plurality of auxiliary air passageway inlets (46a, 46b); and
wherein a first set of the plurality of main passageway outlets (35a) opens into the first compartment (56) and a second set of the plurality of main passageway outlets (35b) opens into the second compartment (58), the first set of the plurality of main passageway outlets (35a) being fluidly coupled with a first set of the plurality of auxiliary passageway inlets (46a) and the second set of the plurality of main passageway outlets (35b) being fluidly coupled with a second set of the plurality of auxiliary passageway inlets (46b).

11. A turbine component (32) for a gas turbine engine (10), comprising:
a cast primary component (23); and
an additively manufactured secondary component (27) comprising a main air passageway (30) extending therethrough;
wherein the primary component (23) is assembled to the secondary component (27) to form the turbine component (32); and
wherein the main air passageway (30) of the secondary component (27) forms part of an internal air flow path through the turbine component (32).

12. The turbine component (32) as claimed in Claim 11, wherein the primary component (23) comprises an auxiliary air passageway (44) extending therethrough, the auxiliary air passageway (44) forming part of the internal air flow path through the turbine component (32).

13. The turbine component (32) as claimed in Claim 12, wherein the main air passageway (30) extends between a main passageway inlet (33) and a main passageway outlet (35), and the auxiliary air passageway (44) extends between an auxiliary passageway inlet (46) and an auxiliary passageway outlet (48); and
wherein the main passageway outlet (35) is fluidly coupled with the auxiliary passageway inlet (46) and configured to deliver a flow of air (50) from the main air passageway (30) to the auxiliary air passageway (44).

14. The turbine component (32) as claimed in Claim 13, wherein the secondary component (27) comprises an outlet surface (40) arranged to face and be offset from an impingement surface (42) of the primary component (23) to create a cooling chamber (36) between the primary component (23) and the secondary component (27).

15. The turbine component as claimed in Claim 14, wherein the main passageway outlet (35) is located on the outlet surface (40) and the auxiliary passageway inlet (46) is located on the impingement surface (42), the main passageway outlet (35) being offset relative to the auxiliary passageway inlet (46) and configured to direct a flow of air (50) to impinge on the impingement surface (42) before entering the auxiliary passageway inlet (46).
